# EUROPÄISCHE PATENTSCHRIFT

(11) **EP 3 589 486 B1**
(45) Veröffentlichungstag und Bekanntmachung des Hinweises auf die Patenterteilung: **09.10.2024**
(21) Anmeldenummer: 17710683.8
(22) Anmeldetag: 03.03.2017
(51) Int. Cl.: B32B 15/01, C21D 1/70, H01F 3/04, H01F 27/25, H01F 41/02

(54) **VERBUNDWERKSTOFF FÜR EINEN TRANSFORMATOR**
COMPOSITE MATERIAL FOR A TRANSFORMER
MATÉRIAU COMPOSITE POUR TRANSFORMATEUR

(43) Veröffentlichungstag der Anmeldung: 08.01.2020
(73) Patentinhaber: thyssenkrupp AG, 45143 Essen (DE); ThyssenKrupp Electrical Steel GmbH, 45881 Gelsenkirchen (DE)
(72) Erfinder: HECHT, Christian, 45481 Mülheim an der Ruhr (DE); LAHN, Ludger, 47447 Moers (DE); LEMAÎTRE, Régis, 83780 Flayosc (FR); SCHEPERS, Carsten, 46348 Raesfeld (DE); WANG, Chaoyong,, 44149 Dortmund (DE); ROGNER, Ingo, 85049 Ingolstadt (DE); LEWE, Tobias, 48147 Münster (DE)
(74) Vertreter: Cohausz & Florack
(86) Internationale Anmeldenummer: PCT/EP2017/055068
(87) Internationale Veröffentlichungsnummer: WO 2018/157946

(56) Entgegenhaltungen:
- EP-A1- 0 305 966
- WO-A2-2009/101129

## Beschreibung

### Technisches Gebiet

Die vorliegende Anmeldung betrifft einen Verbundwerkstoff, insbesondere zur Anwendung in einem Transformator, ein Verfahren zur Herstellung des erfindungsgemäßen Verbundwerkstoffs sowie eine Verwendung eines solchen Verbundwerkstoffs.

### Technischer Hintergrund

In aus dem Stand der Technik bekannten Transformatoren wird kornorientiertes Elektroband in Form von Lamellen verbaut. Durch den Effekt der Magnetostriktion schwingen diese bei Anlegen eines Wechselstroms, was zu dem typischen Brummen eines Transformators führt. Da Transformatoren auch in oder in der Nähe von Wohngebieten aufgestellt werden, müssen zusätzliche schalldämpfende Maßnahmen getroffen werden, um die Geräuschbelastung zu mindern. Diese sind sehr kostenintensiv.

Weitere aus dem Stand der Technik bekannte Mittel, die die Geräuschbelastung mindern sind körperschalldämpfende Verbundbleche, die in Transformatoren verbaut werden. So offenbart beispielsweise die US 6,499,209 B1 einen aus einer Vielzahl von Verbundblechen hergestellten Transformator. Die einzelnen Verbundbleche bestehen hierbei aus zwei äußeren magnetischen Schichten und einer dazwischen angeordneten ca. 25 µm dicken viskoelastischen Folie auf Basis eines vernetzten Acrylpolymers.

Solche Systeme zeigen zwar die erforderlichen akustischen Eigenschaften und aufgrund der entsprechend großen Schichtdicken geeignete Haftungswerte, allerdings weisen die bekannten Systeme weiterhin nicht die für die Anwendung in einem Transformator ausreichenden magnetischen Eigenschaften sowie unter Verwendung dieser in einem Eisenkern erzielbaren Eisenfüllfaktoren auf. Es besteht daher weiteres Entwicklungspotential dieser Verbundbleche.

Neben dem voranstehend erläuterten Stand der Technik ist aus der EP 0 305 966 A1 ein Verfahren bekannt, bei dem zur Erzeugung eines Isolierfilms auf ein kornorientiertes Elektroblech eine organische Isolierbeschichtung aufgetragen wird, die anschließend bei 250 - 350 °C eingebrannt wird. Als organische Isolierbeschichtung ist dabei eine acrylartige Beschichtung oder eine Beschichtung aus Styrol, Polyvinyl, Melamin, Phenol, Silizium, Vinylacetat, Epoxid oder ähnliches vorgesehen. Durch die organische Beschichtung sollen verbesserte Stanzeigenschaften des kornorientierten Elektrostahlblechs erhalten werden.

Zudem ist aus der WO 2009/101129 A2 ein Verfahren zur Herstellung eines mit einer Phosphatschicht belegten kornorientierten Elektrobands bekannt, bei dem auf das Elektroband eine Phosphatlösung aufgebracht wird, die eine kolloide Komponente und mindestens einen Kolloidstabilisator enthält. Aus dem so beschichteten Elektroband werden Lamellen gestanzt, die jeweils eine einzelne Elektroblechlage und die darauf gegebenenfalls aufgetragenen Schichten umfassen.

### Zusammenfassung der Erfindung

Der Erfindung liegt die Aufgabe zu Grunde einen gegenüber dem Stand der Technik verbesserten Verbundwerkstoff bereitzustellen, insbesondere einen Verbundwerkstoff zur Anwendung in einem Transformator bereitzustellen, der gegenüber einem monolithischen Elektroband verbesserte Eigenschaften aufweist.

Gelöst wird diese Aufgabe durch einen Verbundwerkstoff mit den Merkmalen des Patentanspruchs 1.

Vorteilhafte Ausgestaltungen und Varianten der Erfindung ergeben sich aus den abhängigen Ansprüchen und der nachfolgenden Beschreibung.

Erfindungsgemäß ist vorgesehen, dass der Verbundwerkstoff, insbesondere zur Anwendung in einem Transformator eine erste und eine zweite kornorientierte Elektrobandschicht und eine dazwischen angeordnete polymere Schicht umfasst, wobei die polymere Schicht aus einem vernetzten hochmolekularen Acrylat-basierten Copolymer besteht und eine Schichtdicke im Bereich von 3 bis 10 µm aufweist, wobei das vernetzte hochmolekulare Acrylatbasierte Copolymer sich zusammensetzt aus einer copolymerisierten Mischung von mindestens einer Alkylacrylatester-Monomereinheit und/oder Alkylmethacrylatester-Monomereinheit, wobei beide eine Alkylgruppe mit 1 bis 12 Kohlenstoffatomen aufweisen,einer Glycidyl-Monomereinheit,einer ungesättigten Carbonsäure-Monomereinheit, und einem Vernetzer und die copolymerisierte Mischung eine mittlere molare Masse von 500 kDa bis 1500 kDa aufweist.

Überraschenderweise hat sich gezeigt, dass der erfindungsgemäße Verbundwerkstoff im Vergleich zu aus dem Stand der Technik bekannten Verbundwerkstoffen definierte weichmagnetische Eigenschaften aufweist, die im Bereich von monolithischen Elektrobandblechen liegen.

Vorzugsweise weist der Verbundwerkstoff einen Verlust bei P1,7; 50 Hz im Bereich von 0,60 bis 1,0 W/kg, mehr bevorzugt 0,60 bis 0,90 W/kg, am meisten bevorzugt 0,60 bis 0,8 W/kg und/oder eine Feldstärke bei J800 im Bereich von 1,88 bis 1,96 T, mehr bevorzugt 1,90 bis 1,96 T ermittelt nach DIN EN 60404-2 auf.

Weiterhin hat sich überraschenderweise hat sich gezeigt, dass der erfindungsgemäße Verbundwerkstoff im späteren Anwendungsbereich Transformator einen vergleichbaren Eisenfüllfaktor aufweist, wie im aktuellen Stand der Technik und somit keinen Leistungsabfall zeigt.

Vorzugsweise beträgt der Eisenfüllfaktor in einem Transformator unter Verwendung des erfindungsgemäßen Verbundwerkstoffs 96,0 bis 99,0 %, mehr bevorzugt 98,0 bis 99,0 %, noch mehr bevorzugt 98,3 bis 99,0 %.

Durch den Einsatz des erfindungsgemäßen Verbundwerkstoffs kann nicht nur aktiv der entstehende Körperschall im Transformator signifikant reduziert, sondern zudem durch beispielsweise Variation der eingesetzten Elektrobandblechdicken eine erhöhte Effizienz generiert werden.

Dadurch, dass die polymere Schicht aus einem vernetzten hochmolekularen Acrylat-basierten Copolymer besteht können die Vibrationen und/oder Schwingungen verbessert aufgenommen und in Wärmeenergie umgewandelt werden. Hierdurch wird eine signifikante Reduzierung der des Körperschalls erreicht, sodass der Einsatz von sekundären Akustikmaßnahmen deutlich reduziert oder sogar vollständig entfallen kann.

Die Ummagnetisierungsverluste von Elektrobandblechen hängen sehr stark von den Dicken der eingesetzten Bleche ab. In der Regel gilt, dass je kleiner die Dicke des Elektrobands ist, desto geringer fällt der Verlust aus. Durch die Verwendung des erfindungsgemäßen Verbundblechs können - im Vergleich zu einem Elektroband mit einer Dicke von beispielsweise 0,40 mm - zwei Elektrobänder entsprechend besserer Qualität mit einer Dicke von 0,20 mm miteinander verklebt werden. Bezogen auf einen Transformatortyp kann dadurch entweder die Effizienz des Transformators signifikant erhöht oder der Bau eines kleineren Transformators mit gleicher Effizienz ermöglicht werden.

In der Praxis kommen die Verbundwerkstoffe selbst als auch die daraus erzeugten Bauteile teilweise in Kontakt mit unterschiedlichen teils sehr aggressiven Ölen, die die polymere Schicht angreifen können und somit zu einer Delamination führen. Es ist daher wünschenswert, dass die polymere Schicht gegen solche technischen Öle beständig ist. So hat sich gezeigt, dass wenn sich das vernetzte hochmolekulare Acrylat-basierte Copolymer aus einer copolymerisierten Mischung von mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit, einer ungesättigte Carbonsäure-Monomereinheit, und einem Vernetzer zusammensetzt, kein Aufquellen der polymeren Schicht oder Delamination des Verbundwerkstoffs erkennbar ist.

In einer mehr bevorzugten Ausführungsform setzt sich das vernetzte hochmolekulare Acrylat-basierte Copolymer ausschließlich aus den beiden Komponenten, der copolymerisierten Mischung und dem Vernetzer, zusammen.

Erfindungsgemäß besteht die copolymerisierte Mischung aus mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit und einer ungesättigte Carbonsäure-Monomereinheit.

Vorzugsweise ist die Glycidyl-Monomereinheit ausgewählt aus der Gruppe bestehend aus Allylglycidylether, Glycidylacrylatester, Glycidylmethacrylatester und/oder Mischungen hiervon.

Vorzugsweise weist die Alkylacrylatester-Monomereinheit und/oder Alkylmethacrylatester-Monomereinheit eine Alkylgruppe mit 4 bis 12 Kohlenstoffatomen auf.

Sofern die polymere Schicht eine Glassübergangstemperatur von höher -15 °C aufweist kann gemäß einer bevorzugten Ausführungsform der zu copolymerisierenden Mischung eine Alkylacrylatester-Monomereinheit und/oder Alkylmethacrylatester-Monomereinheit mit einer Alkylgruppe mit 1 bis 4 Kohlenstoffatomen zugegeben werden.

Gemäß einer bevorzugten Ausführungsform setzt sich das vernetzte hochmolekulare Acrylat-basierte Copolymer aus einer copolymerisierten Mischung von mindestens 55 bis 85 Gew.-% einer Alkylacrylatester-Monomereinheit und/oder Alkylmethacrylatester-Monomereinheit, wobei beide eine Alkylgruppe mit 4 bis 12 Kohlenstoffatomen aufweisen, 0 bis 35 Gew.-% einer Alkylacrylatester-Monomereinheit und/oder Alkylmethacrylatester-Monomereinheit, wobei beide eine Alkylgruppe mit 1 bis 4 Kohlenstoffatomen aufweisen, 0,01 bis 2 Gew.-% einer Glycidyl-Monomereinheit, 1 bis 15 Gew.-%, mehr bevorzugt 3 bis 13 Gew.-% einer ungesättigte Carbonsäure-Monomereinheit, und 0,05 bis 1 Gew.-% eines Vernetzers zusammen.

Die copolymerisierte Mischung weist eine mittlere molare Masse im Bereich von 500 bis 1500 kDa, mehr bevorzugt 600 bis 1000 kDa, noch mehr bevorzugt 700 bis 900 kDa, am meisten bevorzugt 800 kDa ± 20 kDa auf. Die mittlere molare Masse wird hierbei mittels GPC ermittelt. Zur Kalibrierung wurde Polystyrolstandard verwendet.

Vorzugsweise wird die Alkylacrylatester-Monomereinheit und/oder Alkylmethacrylatester-Monomereinheit, aufweisend eine Alkylgruppe mit 4 bis 12 Kohlenstoffatomen ausgewählt aus 2-Ethylhexylacrylat, Isooctylacrylat, Acrylsäurebutylester, 2-Methylbutyl-acrylat, 4-Methyl-2-pentyl-acrylat, Isodecylmethacrylat, Acrylsäuremethylester, Acrylsäureethylester, Methacrylsäuremethylester und/oder einer Mischung hiervon.

Vorzugsweise wird die ungesättigte Carbonsäure-Monomereinheit ausgewählt aus Acrylsäure, Methacrylsäure, Fumarsäure und/oder einer Mischung hiervon. Bevorzugte Mischungen setzen sich zusammen aus Acrylsäure und Methacrylsäure, aus Acrylsäure und Fumarsäure oder aus Methacrylsäure und Fumarsäure.

Gemäß einer bevorzugten Ausführungsform wird die Copolymerisation unter Zuhilfenahme eines Lösungsmittelgemisches, vorzugsweise eines Gemisches aus Essigsäureethylester und Aceton, durchgeführt. Bevorzugt weist das Lösungsmittelgemisch ein Verhältnis aus, das einen Rückfluss im Bereich von 68 bis 78 °C erlaubt.

Vorzugsweise beträgt der Feststoffanteil während der Copolymerisation im Bereich von 40 bis 60 Gew.-% auf.

Für die Copolymerisation wird vorzugsweise AIBN als Radikalstarter verwendet.

Weiterhin wird die Copolymerisation vorzugsweise unter einer Stickstoffatmosphäre durchgeführt, so dass ein hochmolekulares Copolymer, vorzugsweise mit einer mittleren Molmasse von ≥ 500 kDa erzielt wird.

Vorzugsweise ist der Vernetzer ausgewählt aus Aluminiumacetylacetonat (AIACA) Eisenacetylacetonat (FeACA), Titanacetylacetonat (TiACA) oder Zirkoniumacetylacetonat (ZrACA).

Gemäß einer weiteren bevorzugten Ausführungsform weist die Elektrobandschicht eine Schichtdicke im Bereich von 50 bis 1500 µm, mehr bevorzugt im Bereich von 100 bis 500 µm, noch mehr bevorzugt im Bereich von 150 bis 350 µm und am meisten bevorzugt im Bereich von 180 bis 270 µm auf.

Zur Herstellung des erfindungsgemäßen Verbundwerkstoffs können zwei gleich dicke oder unterschiedlich dicke Elektrobandschichten verwendet werden.

Gemäß einer anderen bevorzugten Ausführungsform weist die kornorientierte Elektrobandschicht eine oder vorzugsweise 2 bis 5, mehr bevorzugt 2 bis 3 Oberflächenschichten mit jeweils einer Schichtdicke im Bereich von 0,3 bis 5 µm, mehr bevorzugt 1 bis 2,5 µm auf. Die Oberflächenschicht übt eine Zugspannung auf den Eisensilikatanteil der kornorientierten Elektrobandschicht aus, so dass die Differenz zwischen magnetischem Verlust der Einzelbleche und des fertigen Transformators (sog. Baufaktor) minimiert wird.

Jede Schicht kann aus einem Silikat, bevorzugt einem Magnesiumsilikat, alternativ einer phosphatischen Verbindung, bevorzugt einer phosphosilikatischen Verbindung bestehen.

Gemäß einer anderen bevorzugten Ausführungsform weist die polymere Schicht eine Schichtdicke im Bereich von 4 bis 8 µm, mehr bevorzugt im Bereich von 4,5 bis 7,5 µm auf.

Gemäß einem weiteren Aspekt betrifft die vorliegende Erfindung ein Verfahren zur kontinuierlichen Herstellung eines Verbundwerkstoffs umfassend die Verfahrensschritte:
- Bereitstellen einer ersten kornorientierten Elektrobandschicht,
- Beschichten der ersten kornorientierten Elektrobandschicht mit einem polymeren Mittel bestehend aus einem hochmolekularen Acrylat-basierten Copolymer und einem Vernetzer,
- Erwärmen der beschichteten ersten kornorientierten Elektrobandschicht,
- Bereitstellen und erwärmen einer zweiten kornorientierten Elektrobandschicht,
- Laminieren der beiden kornorientierten Elektrobandschichten, so dass ein Verbundwerkstoff mit einer polymeren Schicht bestehend aus einem vernetzten hochmolekularen Acrylat-basierten Copolymer mit einer Schichtdicke im Bereich von 3 bis 10 µm erhalten wird.

Vorzugsweise wird die erste kornorientierte Elektrobandschicht als auch die zweite kornorientierte Elektrobandschicht als Coil bereitgestellt, so dass ein kontinuierliches Verfahren zu Herstellung des erfindungsgemäßen Verbundwerkstoffs realisiert werden kann.

Vorzugsweise erfolgt die Beschichtung der ersten kornorientierten Elektrobandschicht mittels eines Coaters. Hierdurch wird eine homogene Schicht des polymeren Mittels auf die erste kornorientierte Elektrobandschicht appliziert. Die Applikation erfolgt derart, dass der Verbundwerkstoff nach dem Schritt des Laminierens eine polymere Schicht mit einer Schichtdicke im Bereich von 3 bis 10 µm, vorzugsweise 4 bis 8 µm, mehr bevorzugt im Bereich von 4 bis 8 µm und am meisten bevorzugt im Bereich von 4,5 bis 7,5 µm aufweist.

Gemäß einer weiteren bevorzugten Ausführungsform findet zwischen dem Schritt des Bereitstellens der ersten Elektrobandschicht und dem Auftragen der polymeren Schicht eine Vorbehandlung der ersten Elektrobandschicht statt. Vorzugsweise handelt es sich bei der Vorbehandlung um eine Reinigung. Hierbei wird die Oberfläche des eingesetzten Elektrobands von anhaftenden Schmutzpartikeln sowie Ölen befreit und somit auf die Applikation mit dem polymeren Mittel vorbereitet.

In einer bevorzugten Ausführungsform wird das hochmolekulare Acrylat-basierte Copolymer von einer copolymerisierten Mischung von mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit, und einer ungesättigte Carbonsäure-Monomereinheit gebildet.

Vorzugsweise werden die Elektrobandschichten auf eine Temperatur im Bereich von 150 bis 250 °C, mehr bevorzugt im Bereich von 160 bis 190 °C, weiter bevorzugt im Bereich von 175 bis 185 °C erwärmt. Das Erwärmen der Elektrobandschichten kann mittels konventioneller Öfen oder mittels Induktion erfolgen. Entsprechende Techniken sind dem Fachmann bekannt.

Das Laminieren der beiden temperierten Elektrobandschichten erfolgt vorzugsweise mittels einer Dublierstation. Hierbei wird die erste Elektrobandschicht, auf die das polymere Mittel aufgetragen wurde mit der zweiten Elektrobandschicht zusammengeführt, so dass der erfindungsgemäße Verbundwerkstoff erhalten wird.

Der noch heiße Verbundwerkstoff durchläuft in der Regel eine Abkühlstrecke, wo er sich auf Raumtemperatur abkühlt und anschließend zu einem Coil gewickelt wird.

Gemäß einer besonders bevorzugten Ausführungsvariante wird in einer nächsten Prozessetappe ein thermisch aktivierbarer Klebstoff mittels eines Coil-Coatings Verfahrens auf eine, mehr bevorzugt auf beide Seiten des Verbundwerkstoffs aufgetragen.

Gemäß einem weiteren Aspekt betrifft die vorliegende Erfindung einen Verbundwerkstoff hergestellt durch das erfindungsgemäße Verfahren.

Bevorzugt weist ein derart hergestellter Verbundwerkstoff mit im Vergleich zu aus dem Stand der Technik bekannten Verbundwerkstoffen weichmagnetische Eigenschaften auf, die im Bereich von monolithischen kornorientierten Elektrobandblechen liegen.

Vorzugsweise weist der Verbundwerkstoff einen Verlust bei P1,7; 50 Hz im Bereich von 0,60 bis 1,0 W/kg, mehr bevorzugt 0,60 bis 0,90 W/kg, am meisten bevorzugt 0,60 bis 0,8 W/kg und/oder eine Feldstärke bei J800 im Bereich von 1,88 bis 1,96 T, mehr bevorzugt 1,90 bis 1,96 T ermittelt nach DIN EN 60404-2 auf.

In einem weiteren Aspekt betrifft die vorliegende Erfindung einen Eisenkern enthaltend eine Vielzahl Lamellen des erfindungsgemäßen Verbundwerkstoffs.

In einem weiteren Aspekt betrifft die vorliegende Erfindung einen Transformator enthaltend einen erfindungsgemäßen Eisenkern.

Ein weiterer Aspekt der vorliegenden Erfindung betrifft ferner ein Verfahren zur Herstellung eines Eisenkerns umfassend die Schritte:
- Bereitstellen eines erfindungsgemäßen Verbundwerkstoffs,
- Abtrennen einer Vielzahl an Lamellen aus dem Verbundwerkstoff, und
- Verbinden der Lamellen zu einem Eisenkern.

Das Abtrennen der Lamellen aus dem Verbundwerkstoff, der vorzugsweise als Coil vorliegt, kann beispielsweise mittels eines geeigneten Stanz- oder Schneidwerkzeugs erfolgen. Die abgetrennten Lamellen werden anschließend zu einem Paket gestapelt und miteinander verbunden.

Dadurch, dass bereits ein vorzugsweise als Coil vorliegender Verbundwerkstoff bereitgestellt wird, ergibt sich ein Prozessvorteil beim Abtrennen gegenüber der Herstellung des Eisenkerns unter Verwendung eines monolithischen Elektrobandblechs, da zur Bereitstellung eines Eisenkerns mit der gleichen Anzahl an Lamellen nur die Hälfte der Abtrennschritte erforderlich wird.

Das Verbinden der Lamellen erfolgt vorzugsweise mittels Stanzpakettieren, dabei wird zwischen den einzelnen Lamellen eine mechanische Verbindung erzeugt. Diese Verbindung wird durch Erhöhungen gebildet, die in die einzelnen Lamellen gestanzt wird.

Gemäß einer bevorzugteren Ausführungsvariante werden die einzelnen Lamellen miteinander verklebt. Vorzugsweise wird zum Verkleben ein thermisch aktivierbarer Klebstoff verwendet. Dieser kann vor, während oder nach dem Stapeln der Lamellen aktiviert werden. Somit kann der thermisch aktivierbare Kleber über die verschiedenen Prozessschritte aktiviert und damit in einen klebrigen Zustand gebracht werden, so dass eine zeitliche und/oder räumliche Trennung gegeben ist.

Alternativ kann auch ein sog. Backlack oder eine punktförmige Klebeverbindung zum Verkleben der Lamellen verwendet werden.

In einem weiteren Aspekt betrifft die vorliegende Erfindung die Verwendung des erfindungsgemäßen Verbundwerkstoffs zur Herstellung eines Eisenkerns für einen Transformator.

Im Folgenden wird die Erfindung anhand von Beispielen näher erläutert.

### Beispiele

Es wurden verschiedene polymere Mittel hergestellt:

### Lösung 1:

Hierzu wurde eine Monomerenlösung aus 207 g Acrylsäurebutylester, 61,2 g 2-Ethylhexylacrylat, 23,1 g Acrylsäure und 0,1 g 2,3-Epoxypropylmethacrylat hergestellt. Aus der Monomerenlösung wurden sodann 68,5 g entnommen und einem 1,5 Liter großen Reaktor zugeführt, der mit Stickstoff gespült war. Der Reaktor war mit einer Rühreinrichtung, einem Rückflusskühler und einem Thermistor ausgestattet. Anschließend wurden 29,7 g Essigsäureethylester und 18 g Aceton der Monomerenlösung zugegeben. Die Lösung wurde unter Rückfluss erhitzt. Sodann wurden 0,05 g AIBN (Dupont) in 4,5 g Essigsäureethylester gelöst und der unter Rückfluss siedenden Lösung zugegeben. Die Lösung wurde dann unter starkem Rückfluss 15 Minuten lang gehalten. Die verbliebene Monomerenlösung wurde mit 195 g Essigsäureethylester, 40 g Aceton und 0,24 g AIBN vermischt und als Lösung der im Reaktor unter Rückfluss siedenden Lösung konstant über 3 Stunden zugegeben. Nach beendeter Zugabe wurde die Lösung für eine zusätzliche Stunde unter Rückfluss gehalten. Anschließend wurde eine Lösung aus 0,12 g AIBN, 9 g Essigsäureethylester und 4 g Aceton dem Reaktor zugegeben und die Lösung für eine weitere Stunde unter Rückfluss gehalten. Dieser Vorgang wurde noch zweimal wiederholt. Nach beendeter Zugabe wurde die Lösung für eine weitere Stunde unter Rückfluss gehalten. Anschließend wurden 178 g Toluol und 27 g n-Heptan zugegeben. Das erhaltene Rohprodukt wies einen Feststoffanteil von 36 Gew.-% und eine Viskosität von 8000 Pa s auf. Die Viskosität wurde mit Viskosimeter der Firma Brookfield ermittelt (#4 Spindel, 12 U/min). Das erhaltene Copolymer bestand aus 71 Gew.-% Butylacrylat, 21 Gew.-% 2-Ethylhexylacrylat, 8 Gew.-% Acrylsäure und 0,03 Gew.-% 2,3-Epoxypropylmethacrylat. Das Copolymer wurde anschließend mit 0,1 Gew.-% Aluminiumacetylacetonat vermischt, um das polymere Mittel zu erhalten.

### Lösung 2:

Hierzu wurde eine Monomerenlösung aus 30 g Methacrylsäurebutylester, 150 g Acrylsäurebutylester, 27 g Ethylmethacrylat, 55 g 2-Ethylhexylacrylat, 18,7 g Methacrylsäure und 0,1 g 2,3-Epoxypropylacrylat hergestellt. Aus der Monomerenlösung wurden sodann 75,5 g entnommen und einem 1,5 Liter großen Reaktor zugeführt, der mit Stickstoff gespült war. Der Reaktor war mit einer Rühreinrichtung, einem Rückflusskühler und einem Thermistor ausgestattet. Anschließend wurden 32 g Essigsäureethylester und 20 g Aceton der Monomerenlösung zugegeben. Die Lösung wurde unter Rückfluss erhitzt. Sodann wurden 0,05 g AIBN (Dupont) in 4,5 g Essigsäureethylester gelöst und der unter Rückfluss siedenden Lösung zugegeben. Die Lösung wurde dann unter starkem Rückfluss 15 Minuten lang gehalten. Die verbliebene Monomerenlösung wurde mit 195 g Essigsäureethylester, 40 g Aceton und 0,24 g AIBN vermischt und als Lösung der im Reaktor unter Rückfluss siedenden Lösung konstant über 3 Stunden zugegeben. Nach beendeter Zugabe wurde die Lösung für eine zusätzliche Stunde unter Rückfluss gehalten. Anschließend wurde eine Lösung aus 0,12 g AIBN, 9 g Essigsäureethylester und 4 g Aceton dem Reaktor zugegeben und die Lösung für eine weitere Stunde unter Rückfluss gehalten. Dieser Vorgang wurde noch zweimal wiederholt. Nach beendeter Zugabe wurde die Lösung für eine weitere Stunde unter Rückfluss gehalten. Anschließend wurden 183 g Toluol und 27 g n-Heptan zugegeben. Das erhaltene Rohprodukt wies einen Feststoffanteil von 38 Gew.-% und eine Viskosität von 7500 Pa.s auf. Die Viskosität wurde mit Viskosimeter der Firma Brookfield ermittelt (#4 Spindel, 12 U/min). Das erhaltene Copolymer bestand aus 10 Gew.-% Butylmethacrylat, 53 Gew.-% Butylacrylat, 10 Gew.-% Ethylmethaycrylat, 20 Gew.-% 2-Ethylhexylacrylat, 6,5 Gew.-% Methacrylat und 0,03 Gew.-% 2,3-Epoxypropylacrylat. Das Copolymer wurde anschließend mit 0,1 Gew.-% Aluminiumacetylacetonat vermischt, um das polymere Mittel zu erhalten.

### Lösung 3 (Referenz):

Als Referenz wurde ein viskoelastisches Schwingungsdämpfungsmaterial ISD 110 von 3M verwendet. Die Applikation erfolgte gemäß Datenblatt mit einem Film mit 1 und 2 mils entsprechend min. 25 bzw. 50 µm Dicke. Der Klebstoff wurde in 25 bzw. 50 µm Dicke mit einem Papierliner geliefert und enthielt keine Lösemittel. Beim Erwärmen gasen 5 bis 30 µg/cm² flüchtige Stoffe aus (Kohlenwasserstoffe, organische Ester, Ester, Alkohole, Acrylate, Acetate, etc.). Das Auftragen erfolgte entsprechend dem Datenblatt. Lufteinschlüsse wurden vermieden.

### Lösung 4 (Referenz):

Weiterhin wurde ein Allzweckkleber der Firma UHU^{®} eingesetzt. Diese lag als farbloses kristallklares Gel vor und hatte eine gelartige, thixotrope Konsistenz. Die Formulierung hatte einen Festkörpergehalt von 32 Gew.-% auf Basis eines Polyvinylesters mit einer Dichte von 0,95 g/cm³. Als Lösemittel wurde ein Gemisch niedrig siedender Ester und Alkohole eingesetzt. Die Formulierung bestand zu 50 bis 70 Gew.-% aus Methylacetat und zu je 5 bis 10 Gew.-% aus Ethanol und Aceton.

### Beispiel 1

Es wurden insgesamt 20 Transformatorenkerne gebaut. In allen Beispielen gemäß Tabelle 1 wurde ein Verbundwerkstoff unter Verwendung von zwei kornorientierten Elektrobändern der Elektrobandsorte 23HP85D (Nenndicke 230 µm) bzw. 27HP85D (Nenndicke 270 µm), und des jeweiligen polymeren Mittels hergestellt.

Hierzu wurden für die Lösungen 1, 2 und 4 kornorientierte Elektrobänder mittels eines Coaters mit dem Klebstoffsystem in den angegebenen Schichtdicken beschichtet. Für die Lösung 3 wurde die entsprechend dicke, feste Klebstoffschicht mit einem Roller blasenfrei auf die kornorientierten Elektrobänder appliziert. Das Material wurde dann für 1 min bei 110 °C vorgetrocknet, um das Lösungsmittel zu entfernen. Für den Laminierprozess mit den Lösungen 1 bis 4 gemäß Tabelle 1 sind dann die entsprechende Elektrobänder in einem Durchlaufofen (Ofenzeit ca. 50 s) auf ca. 180 °C erhitzt worden. Unmittelbar nach Erreichen der PMT (Peak-Metal-Temperature) wurden diese mit ebenfalls auf 180 °C erwärmten kornorientiertem Elektrobandblechen unter Druck in einem Walzenstuhl laminiert. Für Lösung 3 wurden ca. 50 µm Schichtdicke erzielt, in dem zwei beschichtete kornorientierte Elektrobänder miteinander laminiert wurden.

Aus 0.8 t (bei den 230 µm dicken Blechen) bzw. 48 t (bei den 270 µm dicken Blechen) des Verbundwerkstoffs wurden nach Stand der Technik Transformatoren mit 3 Schenkeln gebaut und nach EN60076-10 geräuschtechnisch charakterisiert.

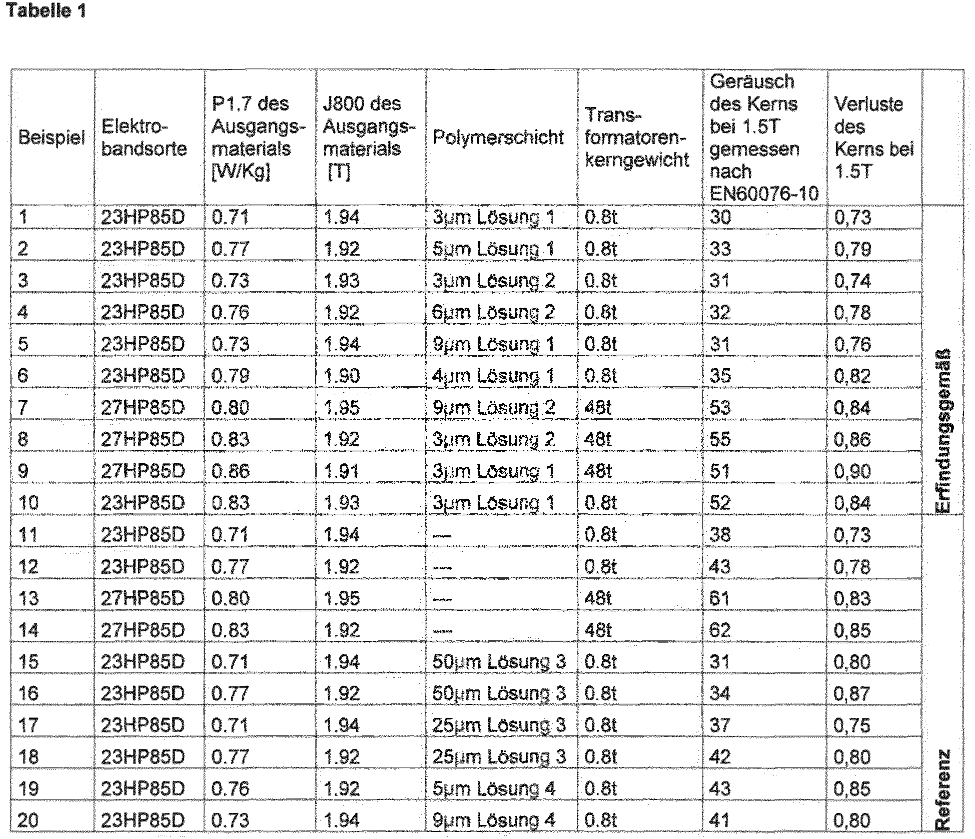

Ferner wurde die Beständigkeit der polymeren Schicht untersucht. Hierzu wurden von den erhaltenen Verbundwerkstoffen entsprechend zugeschnittene Prüfkörper (2,5 x 10cm) für 164 h bei 120 °C in eine entsprechende Prüfflüssigkeit (Getriebeöl Shell ATF 134 FE; Transformatorenöl Nynas Nytro Taurus (IEC 60296) Ed. 4 - Standard grade) gelegt. Nach Ablauf der Belastungszeit wurden die Prüfkörper visuell untersucht. Hierbei konnte weder eine Delamination noch eine Aufquellung der polymeren Schicht nachgewiesen werden.

### Kurze Beschreibung der Zeichnungen

Im Folgenden wird die Erfindung anhand von Zeichnungen näher erläutert. Im Einzelnen zeigen:
- Fig. 1: eine erste Ausführungsvariante des erfindungsgemäßen Verbundwerkstoff,
- Fig. 2: eine zweite Ausführungsvariante des erfindungsgemäßen Verbundwerkstoffs,
- Fig. 3: einen mehrlagigen Aufbau unter Verwendung des Verbundwerkstoffs gemäß der zweiten Ausführungsvariante und
- Fig. 4: ein Prozessschema zur Herstellung des erfindungsgemäßen Verbundwerkstoffs.

### Beschreibung der bevorzugten Ausführungsformen

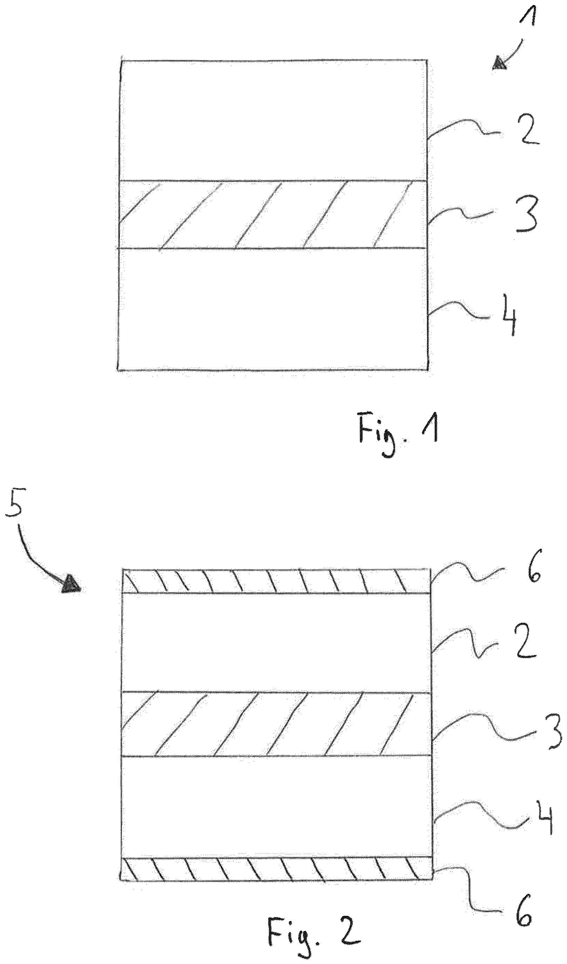

In Fig. 1 ist ein dreischichtiger Aufbau eines erfindungsgemäßen Verbundwerkstoffs 1 gemäß einer ersten Ausführungsform gezeigt. Der Verbundwerkstoff 1 umfasst eine erste Elektrobandschicht 2, eine zweite Elektrobandschicht 4 und eine dazwischen angeordnete polymere Schicht 3.

Fig. 2 zeigt eine zweite Ausführungsvariante des erfindungsgemäßen Verbundwerkstoffs 5 mit einer ersten und zweiten Elektrobandschicht 2, 4 und einer dazwischen angeordneten polymeren Schicht 3. Auf der zu polymeren Schicht 3 gegenüberliegenden Seite weisen die beiden Elektrobandschichten 2, 4 jeweils eine Isolationsschicht 6 auf. Gemäß einer bevorzugten Ausführungsvariante wird diese durch einen thermisch aktivierbaren Klebstoff gebildet.

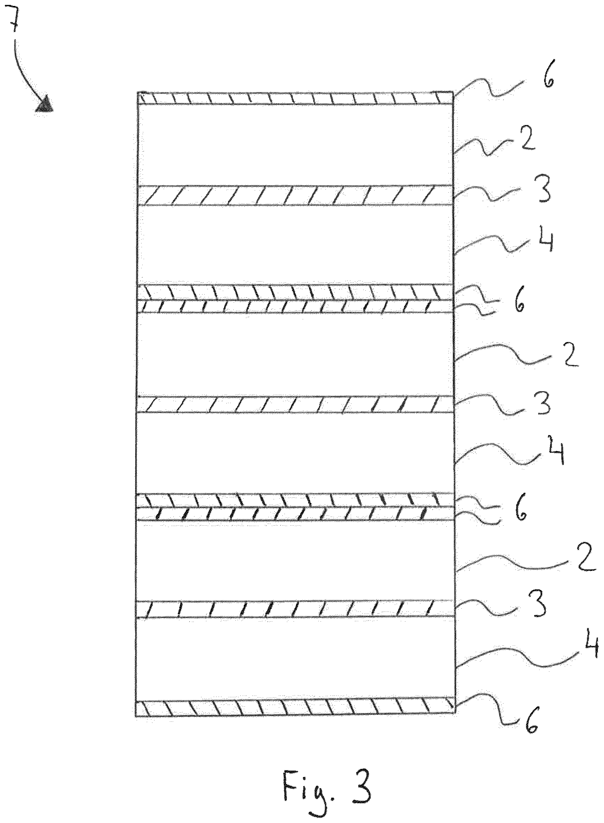

In Fig. 3 ist ein mehrlagiger Aufbau 7 unter Verwendung des Verbundwerkstoffs 5 gemäß der zweiten Ausführungsvariante gezeigt. Die einzelnen Lagen des Verbundwerkstoffs 5 sind hierbei zu einem Stapel übereinander angeordnet. Sofern die Isolationsschicht 6 durch einen thermisch aktivierbaren Klebstoff gebildet wird, weist der mehrlagige Aufbau 7 eine homogene Isolationsschicht 6 zwischen den einzelnen Lamellen auf (nicht gezeigt).

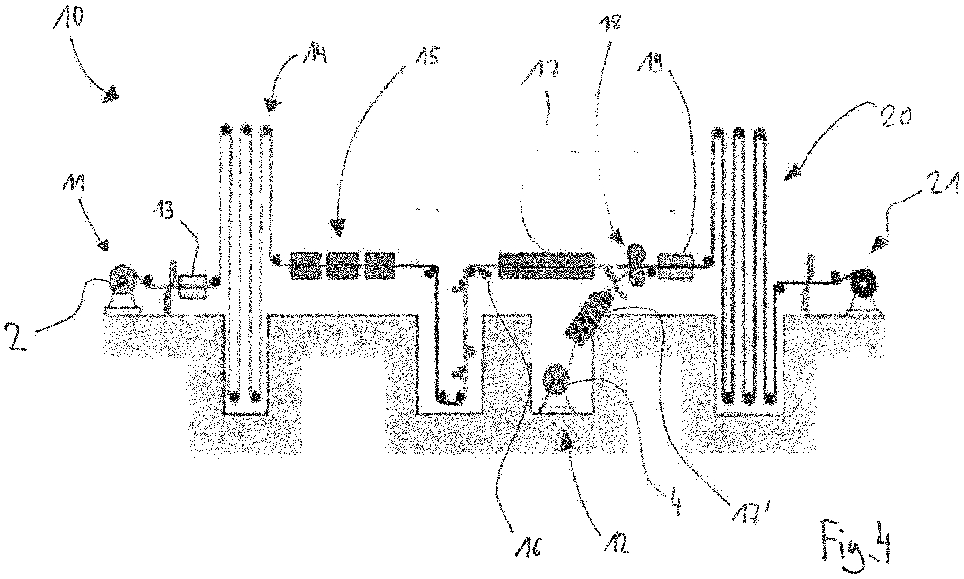

Fig. 4 zeigt ein Prozessschema zur kontinuierlichen Herstellung des erfindungsgemäßen Verbundwerkstoffs 1, 5 mittels einer Bandbeschichtungsanlage 10. Die Anlage 10 weist eine erste und eine zweite Bandabrollstation 11, 12 auf, mit der eine erste und zweite kornorientierte Elektrobandschicht 2, 4 bereitgestellt wird. Ferner weist die Anlage 10 eine Heftvorrichtung 13 und einen ersten und zweiten Bandspeicher 14, 20 auf, die einen Wechsel eines Coils erlauben, ohne dass der Prozess unterbrochen werden muss. Die erste Elektrobandschicht 2 wird ggf. zunächst einer Vorbehandlungsstufe 15 zugeführt, um die Oberfläche der Elektrobandschicht 2 von anhaftenden Schmutzpartikeln sowie Ölen zu befreien. Anschließend wird über eine Auftragswalze 16 das polymere Mittel (nicht dargestellt) einseitig aufgetragen. Die mit dem polymeren Mittel beschichtete Elektrobandschicht 2 durchläuft sodann einen 2-Zonen-Ofen 17, in dem die aufgetragene Beschichtung bei 100 - 120 °C vorgetrocknet wird. Hierbei wird das Lösungsmittel entfernt. In der zweiten Zone des Ofens 17 wird die Elektrobandschicht 2 auf die PMT (170 - 190 °C) erhitzt. Ferner wird eine zweite Elektrobandschicht 4 von der zweiten Abrollstation 12 bereitgestellt und zunächst einer Aufheizstation 17 zugeführt, in der die zweite Elektrobandschicht 4 ebenfalls auf die PMT erwärmt wird. In einer Dublierstation 18 werden beiden Elektrobandschichten 2, 4 unter einem Druck von 5 kN und bei einer Temperatur von 150 - 170 °C miteinander zu dem Verbundwerkstoff 1, 5 laminiert. Anschließend durchläuft der noch heiße Verbundwerkstoff 1, 5 eine Kühlstation, wo er sich auf Raumtemperatur abkühlt und anschließend zu einem Coil auf einer Bandaufrollstation 21 gewickelt wird.

### Bezugszeichenliste

- 1: Verbundwerkstoff
- 2: erste Elektrobandschicht
- 3: polymere Schicht
- 4: zweite Elektrobandschicht
- 5: Verbundwerkstoff
- 6: Isolationsschicht
- 7: mehrlagiger Aufbau
- 10: Bandbeschichtungsanlage
- 11: Bandabrollstation
- 12: Bandabrollstation
- 13: Heftvorrichtung
- 14: Bandspeicher
- 15: Vorbehandlungsstufe
- 16: Auftragswalze
- 17: Aufheizstation
- 18: Dublierstation
- 19: Kühlstation
- 20: Bandspeicher
- 21: Bandaufrollstation

## Patentansprüche

1. Verbundwerkstoff umfassend
- eine erste und eine zweite kornorientiere Elektrobandschicht, und- eine dazwischen angeordnete polymere Schicht, wobei die polymere Schicht aus einem vernetzten hochmolekularen Acrylat-basierten Copolymer besteht und eine Schichtdicke von 3 µm bis 10 µm aufweist, wobei das vernetzte hochmolekulare Acrylatbasierte Copolymer sich zusammensetzt aus
- einer copolymerisierten Mischung von mindestens
- einer Alkylacrylatester-Monomereinheit und/oder Alkylmethacrylatester-Monomereinheit, wobei beide eine Alkylgruppe mit 1 bis 12 Kohlenstoffatomen aufweisen,
- einer Glycidyl-Monomereinheit,
- einer ungesättigten Carbonsäure-Monomereinheit, und
- einem Vernetzer und
die copolymerisierte Mischung eine mittlere molare Masse von 500 kDa bis 1500 kDa aufweist.

2. Verbundwerkstoff nach einem der voranstehenden Ansprüche, **dadurch gekennzeichnet, dass** die kornorientierten Elektrobandschichten jeweils eine Schichtdicke von 50 µm bis 1500 µm aufweisen.

3. Verbundwerkstoff nach einem der voranstehenden Ansprüche, **dadurch gekennzeichnet, dass** die Elektrobandschichten jeweils eine Isolationsschicht mit einer Schichtdicke von 0,5 µm bis 2 µm aufweisen.

4. Verbundwerkstoff nach einem der voranstehenden Ansprüche, **dadurch gekennzeichnet, dass** sein Verlust P_{1,7; 50 Hz} , ermittelt nach DIN EN 60404-2,0, 60 W/kg bis 1,0 W/kg beträgt.

5. Verbundwerkstoff nach einem der voranstehenden Ansprüche, **dadurch gekennzeichnet, dass** seine Feldstärke J800, ermittelt nach DIN EN 60404-2, 1,88 T bis 1,96 T beträgt.

6. Verwendung eines gemäß einem der voranstehenden Ansprüche beschaffenen Verbundwerkstoffs für die Herstellung eines Eisenkerns für einen Transformator.

7. Verfahren zur kontinuierlichen Herstellung eines Verbundwerkstoffs umfassend die Verfahrensschritte:
- Bereitstellen einer ersten kornorientierten Elektrobandschicht,
- Beschichten der ersten Elektrobandschicht mit einem polymeren Mittel bestehend aus einem hochmolekularen Acrylat-basierten Copolymer und einem Vernetzer,
- Erwärmen der beschichteten ersten kornorientierten Elektrobandschicht,
- Bereitstellen und Erwärmen einer zweiten kornorientierten Elektrobandschicht,
- Laminieren der beiden kornorientierten Elektrobandschichten, so dass ein Verbundwerkstoff mit einer polymeren Schicht bestehend aus dem vernetzten hochmolekularen Acrylat-basierten Copolymer, welches sich zusammensetzt wie in Anspruch 1 beansprucht, mit einer Schichtdicke von 3 µm bis 10 µm erhalten wird.

8. Verfahren nach Anspruch 7, **dadurch gekennzeichnet, dass** das hochmolekulare Acrylat-basierte Copolymer aus einer copolymerisierten Mischung von mindestens
- einer Alkylacrylatester-Monomereinheit und/oder Alkylmethacrylatester-Monomereinheit, wobei beide eine Alkylgruppe mit 1 bis 12 Kohlenstoffatomen aufweisen,
- einer Glycidyl-Monomereinheit, und
- einer ungesättigten Carbonsäure-Monomereinheit gebildet wird.

9. Verfahren nach Anspruch 7 oder 8, **dadurch gekennzeichnet, dass** die kornorientierten Elektrobandschichten auf eine Temperatur von 150 °C bis 250 °C erwärmt werden.

## Claims

1. Composite material, comprising
- a first and a second grain-oriented electrical steel strip layer, and-a polymer layer arranged therebetween, wherein the polymer layer consists of a cross-linked high-molecular acrylate-based copolymer and has a layer thickness of 3 µm to 10 µm, wherein the cross-linked high-molecular acrylate-based copolymer is composed of
- a copolymerized mixture of at least
- an alkyl acrylate ester monomer unit and/or alkyl methacrylate ester monomer unit, wherein both of which have an alkyl group which has 1 to 12 carbon atoms,
- a glycidyl monomer unit,
- an unsaturated carboxylic acid monomer unit, and
- a cross-linking agent and
the copolymerized mixture has an average molar mass of 500 kDa to 1500 kDa.

2. Composite material according to any of the preceding claims, **characterized in that** the grain-oriented electrical steel strip layers each have a layer thickness of 50 µm to 1500 µm.

3. Composite material according to any of the preceding claims, **characterized in that** the electrical steel strip layers each have an insulation layer having a layer thickness of 0.5 µm to 2 µm.

4. Composite material according to any of the preceding claims, **characterized in that** its loss P_{1.7}; _{50 Hz} , determined according to DIN EN 60404-2, is 0.60 W/kg to 1.0 W/kg.

5. Composite material according to any of the preceding claims, **characterized in that** its field strength J800, determined according to DIN EN 60404-2, is 1.88 T to 1.96 T.

6. Use of a composite material according to any of the preceding claims for producing an iron core for a transformer.

7. Method for the continuous production of a composite material, the method comprising the following method steps:
- providing a first grain-oriented electrical steel strip layer,
- coating the first electrical steel strip layer with a polymeric agent
consisting of a high-molecular acrylate-based copolymer and a cross-linking agent,
- heating the coated first grain-oriented electrical steel strip layer,
- providing and heating a second grain-oriented electrical steel strip layer,
- laminating the two grain-oriented electrical steel strip layers to obtain a composite material having a polymer layer consisting of the cross-linked high-molecular acrylate-based copolymer, which is composed as claimed in claim 1, having a layer thickness of 3 µm to 10 µm.

8. Method according to claim 7, **characterized in that** the high-molecular acrylate-based copolymer is formed by a copolymerized mixture of at least
- an alkyl acrylate ester monomer unit and/or alkyl methacrylate ester monomer unit, wherein both of which have an alkyl group which has 1 to 12 carbon atoms,
- a glycidyl monomer unit, and
- an unsaturated carboxylic acid monomer unit.

9. Method according to claim 7 or 8, **characterized in that** the grain-oriented electrical steel strip layers are heated to a temperature of 150 °C to 250 °C.

## Revendications

1. Matériau composite comprenant
- une première et une seconde couche de bande électrique à grains orientés et une couche polymère disposée entre elles, dans lequel la couche polymère est constituée d'un copolymère réticulé à base d'acrylate de poids moléculaire élevé et présente une épaisseur de couche allant de 3 µm à 10 µm, dans lequel le copolymère réticulé à base d'acrylate de poids moléculaire élevé est composé
- d'un mélange copolymérisé d'au moins
- un motif monomère ester d'acrylate d'alkyle et/ou un motif monomère ester de méthacrylate d'alkyle, dans lequel tous les deux présentent un groupe alkyle comportant 1 à 12 atomes de carbone,
- un motif monomère glycidyle,
- un motif monomère acide carboxylique insaturé, et
- un agent de réticulation et
le mélange copolymérisé présente une masse molaire moyenne allant de 500 kDa à 1500 kDa.

2. Matériau composite selon l'une des revendications précédentes, **caractérisé en ce que** les couches de bandes électriques à grains orientés présentent respectivement une épaisseur de couche allant de 50 µm à 1500 µm.

3. Matériau composite selon l'une des revendications précédentes, **caractérisé en ce que** les couches de bandes électriques présentent respectivement une couche isolante d'une épaisseur de couche allant de 0,5 µm à 2 µm.

4. Matériau composite selon l'une des revendications précédentes, **caractérisé en ce que** sa perte P_{1,7} ; _{50 Hz} , déterminée selon la norme DIN EN 60404-2, va de 0,60 W/kg à 1,0 W/kg.

5. Matériau composite selon l'une des revendications précédentes, **caractérisé en ce que** son intensité de champ J800, déterminée selon la norme DIN EN 60404-2, va de 1,88 T à 1,96 T.

6. Utilisation d'un matériau composite obtenu selon l'une des revendications précédentes pour la fabrication d'un noyau de fer pour un transformateur.

7. Procédé de fabrication en continu d'un matériau composite, comprenant les étapes de procédé consistant à :
- fournir une première couche de bande électrique à grains orientés,
- revêtir la première couche de bande électrique au moyen d'un agent polymère constitué d'un copolymère à base d'acrylate de poids moléculaire élevé et d'un agent de réticulation,
- chauffer la première couche de bande électrique à grains orientés revêtue,
- fournir et chauffer une seconde couche de bande électrique à grains orientés,
- stratifier les deux couches de bandes électriques à grains orientés, de manière à obtenir un matériau composite comportant une couche polymère constituée du copolymère réticulé à base d'acrylate de poids moléculaire élevé, lequel est composé, comme revendiqué dans la revendication 1, avec une épaisseur de couche de 3 µm à 10 µm.

8. Procédé selon la revendication 7, **caractérisé en ce que** le copolymère à base d'acrylate de poids moléculaire élevé est formé à partir d'un mélange copolymérisé d'au moins
- un motif monomère ester d'acrylate d'alkyle et/ou un motif monomère ester de méthacrylate d'alkyle, dans lequel tous les deux présentent un groupe alkyle comportant 1 à 12 atomes de carbone,
- un motif monomère glycidyle, et
- un motif monomère acide carboxylique insaturé.

9. Procédé selon la revendication 7 ou 8, **caractérisé en ce que** les couches de bandes électriques à grains orientés sont chauffées à une température allant de 150° C à 250° C.
